(19)

Europäisches
Patentamt
European
Patent Office
Office européen
des brevets

(11)  **EP 3 355 410 A1**

(12)  **EUROPEAN PATENT APPLICATION**
published in accordance with Art. 153(4) EPC

(43) Date of publication:
01.08.2018 Bulletin 2018/31

(21) Application number: 15906017.7

(22) Date of filing: 13.10.2015

(51) Int Cl.:
*H01Q 21/00* (2006.01)

(86) International application number:
**PCT/CN2015/091810**

(87) International publication number:
**WO 2017/063132 (20.04.2017 Gazette 2017/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **Huawei Technologies Co., Ltd.
Longgang District
Shenzhen, Guangdong 518129 (CN)**

(72) Inventors:
• **CHEN, Wei
Shenzhen, Guangdong 518129 (CN)**

• **WAN, Rong
Shenzhen, Guangdong 518129 (CN)**
• **HU, Dixiu
Shenzhen, Guangdong 518129 (CN)**
• **BA, Wanhong
Shenzhen, Guangdong 518129 (CN)**

(74) Representative: **Thun, Clemens
Mitscherlich PartmbB
Patent- und Rechtsanwälte
Sonnenstraße 33
80331 München (DE)**

(54)  **MULTI-SECTOR MIMO ACTIVE ANTENNA SYSTEM AND COMMUNICATION DEVICE**

(57)  Embodiments of the present invention provide a multi-sector MIMO active antenna system and a communications device, where the multi-sector MIMO active antenna system includes N columns of dual-polarized antennas, where each column of dual-polarized antennas includes one column of antenna units in a first polarization direction and one column of antenna units in a second polarization direction, antenna array elements in an antenna unit in the first polarization direction are set to have a first antenna downtilt and serve a first sector, and antenna array elements in an antenna unit in the second polarization direction are set to have a second antenna downtilt and serve a second sector.

FIG. 1

**Description**

**TECHNICAL FIELD**

Embodiments of the present invention relate to an antenna technology, and in particular, to a multi-sector MIMO active antenna system and a communications device.

**BACKGROUND**

A multiple-input multiple-output (Multiple-Input Multiple-Output, MIMO) technology means that multiple transmit antennas and receive antennas are used at a transmit end and a receive end, respectively, so that a signal is transferred and received through multiple antennas at the transmit end and the receive end, thereby improving communication quality. The MIMO technology can fully utilize a spatial resource, to implement multiple transmit multiple receive by using multiple antennas, which can increase a system channel capacity manyfold without increasing a spectrum resource and antenna transmit power. An active antenna system (Active Antenna System, AAS) is a radio frequency component that integrates together an antenna and a radio frequency module. In terms of a physical station, an AAS can be considered as integration of a remote radio unit (Remote Radio Unit, RRU) and an antenna, and combines an original RRU function and an antenna function.

The AAS is an important supporter of the MIMO technology and can use the MIMO technology to implement multi-order sending at a base station side. However, in a case in which there are a given quantity of antenna arrays, the MIMO technology alone increases a capacity to a limited extent. In addition, a gain of MIMO can be simply considered as that the gain is higher when an order of a transmit end (that is, a quantity of antenna ports) is higher, but when the order of the transmit end is higher, a corresponding terminal needs to support a receive capability of a higher order. Then, a higher requirement is imposed on the terminal. However, terminals are upgraded periodically, and a large quantity of existing terminals do not support a receive capability of a higher order. Therefore, an order of a MIMO transmit end at the base station end cannot be increased without discretion.

Along with the development of communications technologies, a quantity of terminals multiplies. Therefore, a system capacity needs to be increased urgently. In terms of the downlink, how to increase a system capacity without increasing a quantity of antennas at a base station side is a problem that needs to be urgently resolved at present.

SUMMARY

Embodiments of the present invention provide a multi-sector MIMO active antenna system and a communications device, which are used to improve spectrum utilization and increase a network capacity.

A first aspect provides a multi-sector MIMO active antenna system, including:
N columns of dual-polarized antennas, where each column of dual-polarized antennas includes one column of antenna units in a first polarization direction and one column of antenna units in a second polarization direction, where the first polarization direction and the second polarization direction are different, each of an antenna unit in the first polarization direction and an antenna unit in the second polarization direction includes M antenna array elements, N is a natural number greater than or equal to 2, and M is a natural number greater than or equal to 2, where:
in each column of dual-polarized antennas, an antenna unit in the first polarization direction and an antenna unit in the second polarization direction are separately connected to one transceiver, antenna array elements in the antenna unit in the first polarization direction are set to have a first antenna downtilt and serve a first sector, and antenna array elements in the antenna unit in the second polarization direction are set to have a second antenna downtilt and serve a second sector, where the first antenna downtilt and the second antenna downtilt are different, so that a base station separately performs MIMO transmission with user equipment UE in the first sector and UE in the second sector by using the multi-sector MIMO active antenna system.

With reference to the first aspect, in a first possible implementation manner of the first aspect, the multi-sector MIMO active antenna system further includes a first RCU and a second RCU, where:
the antenna unit in the first polarization direction is connected to the first RCU, the antenna unit in the second polarization direction is connected to the second RCU, the first RCU corresponds to the first antenna downtilt, and the second RCU corresponds to the second antenna downtilt.

With reference to the first aspect or the first possible implementation manner of the first aspect, in a second possible implementation manner of the first aspect, the first polarization direction is +45° and the second polarization direction is -45°.

With reference to any possible implementation manner of the first aspect to the second possible implementation manner of the first aspect, in a third possible implementation manner of the first aspect, the first sector has N beams in the first polarization direction, and the second sector has N beams in the second polarization direction.

A second aspect provides a communications device, including a multi-sector MIMO active antenna system and a BBU, where:
the multi-sector MIMO active antenna system includes:
N columns of dual-polarized antennas, where each column of dual-polarized antennas includes one column of antenna units in a first polarization direction and one column of antenna units in a second polarization direction, where the first polarization direction and the second polarization direction are different, each of an antenna unit in the first polarization direction and an antenna unit in the second polarization direction includes M antenna array elements, N is a natural number greater than or equal to 2, and M is a natural number greater than or equal to 2, where:

in each column of dual-polarized antennas, an antenna unit in the first polarization direction and an antenna unit in the second polarization direction are separately connected to one transceiver, antenna array elements in the antenna unit in the first polarization direction are set to have a first antenna downtilt and serve a first sector, and antenna array elements in the antenna unit in the second polarization direction are set to have a second antenna downtilt and serve a second sector, where the first antenna downtilt and the second antenna downtilt are different;
each transceiver in the multi-sector MIMO active antenna system is connected to the BBU by using an optical fiber; and
the BBU separately performs MIMO transmission with user equipment UE in the first sector and UE in the second sector by using the multi-sector MIMO active antenna system.

With reference to the second aspect, in a first possible implementation manner of the second aspect, the multi-sector MIMO active antenna system further includes a first RCU and a second RCU, where:
the antenna unit in the first polarization direction is connected to the first RCU, the antenna unit in the second polarization direction is connected to the second RCU, the first RCU corresponds to the first antenna downtilt, and the second RCU corresponds to the second antenna downtilt.

With reference to the second aspect or the first possible implementation manner of the second aspect, in a second possible implementation manner of the second aspect, the first polarization direction is +45° and the second polarization direction is -45°.

With reference to any possible implementation manner of the second aspect to the second possible implementation manner of the second aspect, in a third possible implementation manner of the second aspect, the first sector has N beams in the first polarization direction, and the second sector has N beams in the second polarization direction.

In the multi-sector MIMO active antenna system and the communications device provided in the embodiments, N columns of dual-polarized antennas are disposed, where each column of dual-polarized antennas includes one column of antenna units in a first polarization direction and one column of antenna units in a second polarization direction, where each of an antenna unit in the first polarization direction and an antenna unit in the second polarization direction includes M antenna array elements; in each column of dual-polarized antennas, an antenna unit in the first polarization direction and an antenna unit in the second polarization direction are separately connected to one transceiver, the antenna unit in the first polarization direction corresponds to a first antenna tilt in a vertical plane and forms a first sector, and the antenna unit in the second polarization direction corresponds to a second antenna tilt in the vertical plane and forms a second sector. MIMO in two different polarization directions can be implemented by using the antenna system, which improves spectrum utilization efficiency, thereby increasing a network capacity.

**BRIEF DESCRIPTION OF DRAWINGS**

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and persons of ordinary skill in the art may still derive other drawings from these accompanying drawings without creative efforts.

FIG. 1 is a schematic structural diagram of Embodiment 1 of a multi-sector MIMO active antenna system according to the embodiments of the present invention;
FIG. 2 is a schematic structural diagram of Embodiment 2 of a multi-sector MIMO active antenna system according to the embodiments of the present invention; and
FIG. 3 is a schematic structural diagram of Embodiment 1 of a communications device according to the embodiments of the present invention.

**DESCRIPTION OF EMBODIMENTS**

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

A multi-sector technology is a technology in which a multi-antenna array is used to split an original sector into multiple sectors, so as to increase a capacity without increasing bandwidth. That is, the multi-sector technology is to split an original sector corresponding to one antenna beam into sectors corresponding to multiple beams. At present, the multi-sector technology is mainly divided into two categories. In one category, a Butler matrix technology is used, where an N×N Butler matrix is used, and an input signal is output through N output ports so that an antenna beam is split into N beams. However, when the Butler matrix is used for splitting, an angle between the N beams is fixed and cannot be adjusted. A multi-sector technology of the other category is to perform weighted processing on a baseband signal in a digital domain, so that an antenna beam is split. However, interference between cells obtained through splitting in this manner is relatively high.

With reference to characteristics of an AAS and a MIMO technology, the embodiments of the present invention propose a MIMO antenna system in which a new multi-sector splitting manner is used.

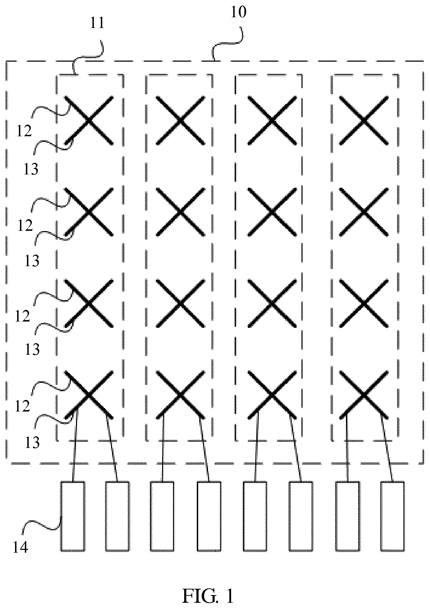

FIG. 1 is a schematic structural diagram of Embodiment 1 of a multi-sector MIMO active antenna system according to the embodiments of the present invention. As shown in FIG. 1, the multi-sector MIMO active antenna system in this embodiment includes:

an antenna 10 comprising four columns of dual-polarized antennas, where each column of dual-polarized antennas 11 includes one column of antenna units 12 in a first polarization direction and one column of antenna units 13 in a second polarization direction, and the first polarization direction and the second polarization direction are different, for example, the first polarization direction and the second polarization direction are orthogonal: the first polarization direction is +45°, and the second polarization direction is -45°; each of an antenna unit 12 in the first polarization direction and an antenna unit 13 in the second polarization direction includes four antenna array elements.

In each column of dual-polarized antennas 11, an antenna unit 12 in the first polarization direction and an antenna unit 13 in the second polarization direction are separately connected to one transceiver (Transmitter and Receiver, TRX) 14. Four antenna array elements in the antenna unit 12 in the first polarization direction are set to have a first antenna downtilt and serve a first sector, and four antenna array elements in the antenna unit 13 in the second polarization direction are set to have a second antenna downtilt and serve a second sector. The first antenna downtilt and the second antenna downtilt refer to angles between the horizon and beams radiated by the antenna array elements that are in a direction perpendicular to the horizon. The first antenna downtilt and the second antenna downtilt are different, for example, the first antenna downtilt is 8°, and the second antenna downtilt is 12°.

Each column of antenna units 12 in the first polarization direction and each column of antenna units 13 in the second polarization direction are separately connected to one transceiver 14. Therefore, the multi-sector MIMO active antenna system provided in this embodiment include eight transceivers 14. In this way, the multi-sector MIMO active antenna system provided in this embodiment can implement an antenna transmit and receive capability of 8 transmit 8 receive (8T8R), where each of the sectors corresponding to the two different downtilts can implement an antenna transmit and receive capability of 4T4R, that is, a MIMO transmit and receive capability of 4T4R.

In each column of dual-polarized antennas 11, the antenna unit 12 in the first polarization direction corresponds to the first antenna downtilt, and the antenna unit 13 in the second polarization direction corresponds to the second antenna downtilt, where the first antenna downtilt and the second antenna downtilt are different. That is, antennas in a same polarization direction correspond to a same downtilt. Then, for the entire multi-sector MIMO active antenna system, the first sector corresponding to the first antenna downtilt and the second sector corresponding to the second antenna downtilt are formed. If the first antenna downtilt is smaller than the second antenna downtilt, it can be seen from a vertical radiation pattern of the multi-sector MIMO active antenna system, that the second sector covers a ring-type area located in an inner circle, and the first sector covers a ring-type area located in an outer circle. In this way, the four columns of dual-polarized antennas 11 are split into two sectors in a vertical direction: the outer sector and the inner sector. In addition, each of the sector in the inner circle and the sector in the outer circle includes four co-polarized beams, and a polarization direction of a beam in the sector in the inner circle and a polarization direction of a beam in the sector in the outer circle are different.

In addition, there are four TRX drivers for each polarization direction, which is equivalent to a 4-transmit 4-receive (4T4R) antenna, that is, 4 transmit in the downlink and 4 receive in the uplink. Therefore, 4×4 MIMO or 4×2 MIMO can be implemented in the downlink according to a capability of a terminal device. In this way, the entire multi-sector MIMO active antenna system can implement two sets of 4×4 MIMO or 4×2 MIMO in different polarization directions in the inner circle and the outer circle. In addition, because the polarization direction of the beam in the inner circle and the polarization direction of the beam in the outer circle are different, no mutual interference will be generated at a location where the inner circle and the outer circle overlap with each other. Therefore, the antennas in the two different polarization directions in the inner circle and the outer circle can reuse a same spectrum resource. That is, a sector splitting technology and a MIMO technology are merged in the multi-sector MIMO active antenna system provided in this embodiment; therefore, in addition to reuse of a spectrum resource, spectrum efficiency of each sector obtained through splitting is improved by using a beamforming technology, thereby increasing a network capacity.

It should be noted that, in each polarization direction, whether a 4×4 MIMO antenna or a 4×2 MIMO antenna is specifically implemented depends on a capability of a terminal. If a terminal supports 4×4 MIMO, 4×4 MIMO is configured for each polarization direction of the multi-sector MIMO active antenna system; if a terminal supports 4×2 MIMO, 4×2 MIMO is configured for each polarization direction of the multi-sector MIMO active antenna system.

In the example used in this embodiment to describe the multi-sector MIMO active antenna system provided in this embodiment of the present invention, the multi-sector MIMO active antenna system includes four columns of dual-polarized antennas 11, where each column of dual-polarized antennas 11 includes one column of antenna units 12 in a first polarization direction and one column of antenna units 13 in a second polarization direction, and an antenna unit 12 in the first polarization direction and an antenna unit 13 in the second polarization direction each include four antenna array elements. However, the multi-sector MIMO active antenna system provided in this embodiment of the present invention is not limited thereto. The active antenna system may include N columns of dual-polarized antennas, and the antenna unit 12 in the first polarization direction and the antenna unit 13 in the second polarization direction may each include M antenna array elements, where N is a natural number greater than or equal to 2, and M is a natural number greater than or equal to 2. The multi-sector MIMO active antenna system including N columns of dual-polarized antennas 11 include 2N transceivers 14. For the multi-sector MIMO active antenna system including N columns of dual-polarized antennas 11, by using the foregoing method, the multi-sector MIMO active antenna system may be used to implement two sets of MIMO in different polarization directions in an inner circle and an outer circle.

In the multi-sector MIMO active antenna system provided in this embodiment, N columns of dual-polarized antennas are disposed, where each column of dual-polarized antennas includes one column of antenna units in a first polarization direction and one column of antenna units in a second polarization direction, where each of an antenna unit in the first polarization direction and an antenna unit in the second polarization direction includes M antenna array elements; in each column of dual-polarized antennas, an antenna unit in the first polarization direction and an antenna unit in the second polarization direction are separately connected to one transceiver, the antenna unit in the first polarization direction corresponds to a first antenna tilt in a vertical plane and forms a first sector, and the antenna unit in the second polarization direction corresponds to a second antenna tilt in the vertical plane and forms a second sector. MIMO in two different polarization directions can be implemented by using the antenna system, which improves spectrum utilization efficiency, thereby increasing a network capacity.

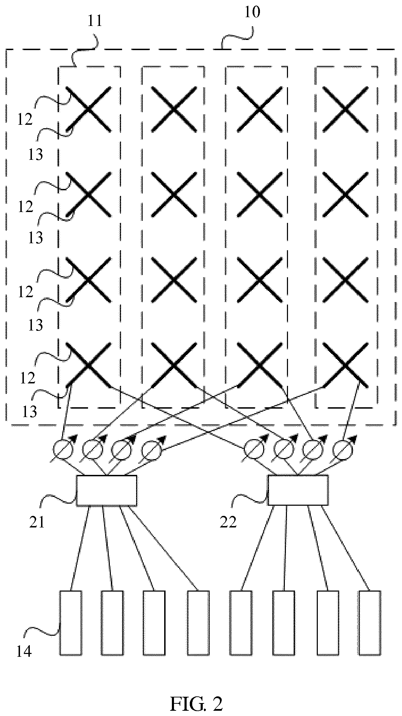

FIG. 2 is a schematic structural diagram of Embodiment 2 of a multi-sector MIMO active antenna system according to the embodiments of the present invention. An AAS antenna can implement antenna beam adjustment, and generally a radio control unit (Radio Control Unit, RCU) is used to implement beam adjustment. Therefore, on a basis of the embodiment shown in FIG. 1, the multi-sector MIMO active antenna system provided in this embodiment further includes a first RCU 21 and a second RCU 22. The antenna unit 12 in the first polarization direction is connected to the first RCU, the antenna unit 13 in the second polarization direction is connected to the second RCU, the first RCU corresponds to the first antenna downtilt, and the second RCU corresponds to the second antenna downtilt, so that the first antenna downtilt and the second antenna downtilt can be adjusted by adjusting the first RCU and the second RCU.

Generally, a dual-polarized antenna of an AAS is implemented by using two sets of antenna units in two polarization directions: +45° and -45°. Therefore, in the embodiment shown in FIG. 1, the first polarization direction is +45° and the second polarization direction is -45°.

The following uses an example in which the multi-sector MIMO active antenna system of the embodiment shown in FIG. 1 implements 4×2 MIMO, to describe in detail a beam generation manner of the multi-sector MIMO active antenna system provided in this embodiment of the present invention.

The 3rd Generation Partnership Project (3rd Generation Partnership Project, 3GPP) protocol stipulates that 4×2 MIMO includes 16 precoding matrix indications (Precoding Matrix Indication, PMI). Corresponding to these 16 PMIs, the two sectors, the inner sector and the outer sector, of the multi-sector MIMO active antenna system shown in FIG. 1 each correspond to 16 sub-beams.

For closed-loop MIMO, each signal $X(i)$ sent to a terminal needs to be multiplied by a precoding matrix $W(i)$, and a precoded transmit signal vector $Y(i)$ of antenna ports 0-(P-1) is:

$$\begin{bmatrix} y^{(0)}(i) \\ M \\ y^{(P-1)}(i) \end{bmatrix} = W(i) \begin{bmatrix} x^{(0)}(i) \\ M \\ x^{(P-1)}(i) \end{bmatrix}$$

where *X*(*i*) is an initial transmit vector, *Y*(*i*) is a precoded transmit vector, the precoding matrix *W*(*i*) is originated from a precoding codebook, and P is a quantity of antenna ports (one antenna port can be simply construed as one polarization of each column of dual-polarized antennas), where in this embodiment, the inner sector and the outer sector each have four antenna ports.

According to the 3GPP protocol, 4×2 closed-loop MIMO has 16 PMIs, as shown in Table 1, where $u_n$ is a basis vector for generating a precoding matrix $W_n = I - 2u_n u_n^H / u_n^H u_n$, where *I* represents a 4×4 unit matrix, and the superscript "H" represents a conjugate transpose operation.

There is high relevance among co-polarized array elements and low relevance among differently-polarized array elements. Because of this characteristic, beamforming can be implemented only when a weight vector of a precoding matrix acts on co-polarized antennas.

According to Table 1 and the formula for computing a precoding matrix, 16 different codebooks $W_n$ can be obtained through computation, as shown in Table 2.

In a dual-polarized MIMO antenna on which the multi-sector splitting method shown in FIG. 1 is not applied, two of four weighted values of each weight vector act on +45° polarization, and the other two act on -45° polarization. There are a maximum of eight weighted value combinations of the 16 codebooks for each polarization; therefore, the 16 codebooks can correspond to a maximum of eight beams. For each polarization, that is, the first two rows or the last two rows in four rows in a codebook, the following weighted value combinations may occur: [1, 1], [1, -1], [1, j], [1, -j], [1, (1+j)/sqrt(2)], [1, (-1+j)/sqrt(2)], [1, (1-j)/sqrt(2)], and [1, (-1-j)/sqrt(2)].

For the multi-sector MIMO active antenna system shown in FIG. 1, because each sector has 4*2 closed-loop MIMO formed by four columns of co-polarized antennas, four weighted values corresponding to each weighted value act on four co-polarized antennas at a same time. Then, 16 codebooks, that is, 16 weighted value combinations, correspond to 16 beams.

The sector in the inner circle and the sector in the outer circle each have 16 beams. An overlapping area of the inner circle and the outer circle is staggered in beam domains at a horizontal plane, which resolves an interference problem in an overlapping area to a large extent; a collaboration effect is naturally generated in the beam domains in the overlapping area. Therefore, the following is implemented in the multi-sector MIMO active antenna system shown in FIG. 1: spectrum resource reusing by means of vertical splitting, 4*2 MIMO beamforming, interference collaboration in the overlapping area of the inner circle and the outer circle by using various beams, which greatly improves performance of the system.

**Table 1**

| Codebook index | $u_n$ |
|---|---|
| 0 | $u_0 = [1\ -1\ -1\ -1]^T$ |
| 1 | $u_1 = [1\ -j\ 1\ j]^T$ |
| 2 | $u_2 = [1\ 1\ -1\ 1]^T$ |
| 3 | $u_3 = [1\ j\ 1\ -j]^T$ |
| 4 | $u_4 = \begin{bmatrix} 1 & (-1-j)/\sqrt{2} & -j & (1-j)/\sqrt{2} \end{bmatrix}^T$ |
| 5 | $u_5 = \begin{bmatrix} 1 & (1-j)/\sqrt{2} & j & (-1-j)/\sqrt{2} \end{bmatrix}^T$ |
| 6 | $u_6 = \begin{bmatrix} 1 & (1+j)/\sqrt{2} & -j & (-1+j)/\sqrt{2} \end{bmatrix}^T$ |
| 7 | $u_7 = \begin{bmatrix} 1 & (-1+j)/\sqrt{2} & j & (1+j)/\sqrt{2} \end{bmatrix}^T$ |
| 8 | $u_8 = [1\ -1\ 1\ 1]^T$ |
| 9 | $u_9 = [1\ -j\ -1\ -j]^T$ |
| 10 | $u_{10} = [1\ 1\ 1\ -1]^T$ |
| 11 | $u_{11} = [1\ j\ -1\ j]^T$ |
| 12 | $u_{12} = [1\ -1\ -1\ 1]^T$ |

(continued)

| Codebook index | $u_n$ |
|---|---|
| 13 | $u_{13} = [1\ \text{-}1\ 1\ \text{-}1]^T$ |
| 14 | $u_{14} = [1\ 1\ \text{-}1\ \text{-}1]^T$ |
| 15 | $u_{15} = [1\ 1\ 1\ 1]^T$ |

Table 2

| Serial number | Single-stream weighted value | Serial number | Single-stream weighted value | Serial number | Single-stream weighted value | Serial number | Single-stream weighted value |
|---|---|---|---|---|---|---|---|
| W0 | 1 | W4 | 1 | W8 | 1 | W12 | 1 |
|  | 1 |  | (1+j)/sqrt(2) |  | 1 |  | 1 |
|  | 1 |  | j |  | -1 |  | 1 |
|  | 1 |  | (-1+j)/sqrt(2) |  | -1 |  | -1 |
| W1 | 1 | W5 | 1 | w9 | 1 | W13 | 1 |
|  | j |  | (-1+j)/sqrt(2) |  | j |  | 1 |
|  | -1 |  | -j |  | 1 |  | -1 |
|  | -j |  | (1+j)/sqrt(2) |  | j |  | 1 |
| W2 | 1 | W6 | 1 | w10 | 1 | W14 | 1 |
|  | -1 |  | (-1-j)/sqrt(2) |  | -1 |  | -1 |
|  | 1 |  | j |  | -1 |  | 1 |
|  | -1 |  | (1-j)/sqrt(2) |  | 1 |  | 1 |
| W3 | 1 | W7 | 1 | W11 | 1 | w15 | 1 |
|  | -j |  | (1-j)/sqrt(2) |  | -j |  | -1 |
|  | -1 |  | -j |  | 1 |  | -1 |
|  | j |  | (-1-j)/sqrt( 2) |  | -j |  | -1 |

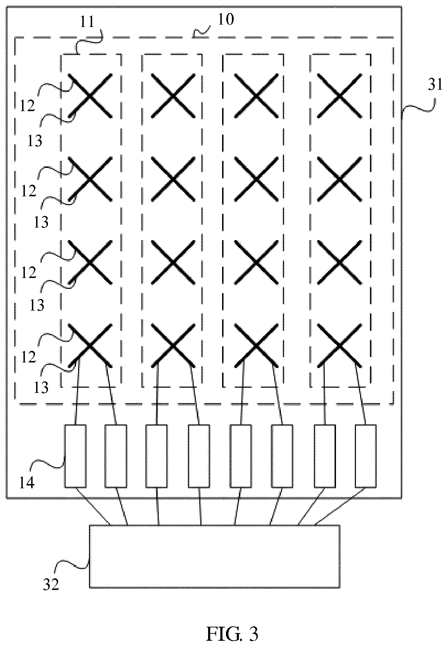

FIG. 3 is a schematic structural diagram of Embodiment 1 of a communications device according to the embodiments of the present invention. As shown in FIG. 3, the communications device in this embodiment includes a multi-sector MIMO active antenna system 31 and a baseband unit (Base Band Unit, BBU) 32.

The multi-sector MIMO active antenna system 31 includes the multi-sector MIMO active antenna system shown in FIG. 1 or FIG. 2. The multi-sector MIMO active antenna system 31 is used to execute processing of the multi-sector MIMO active antenna system shown in FIG. 1 or FIG. 2. Each transceiver in the multi-sector MIMO active antenna system 31 is connected to the BBU 32 by using an optical fiber. The BBU 32 separately performs MIMO transmission, by using the multi-sector MIMO active antenna system 31, with user equipment (User Equipment, UE) in a first sector served by the multi-sector MIMO active antenna system 31 and UE in a first sector served by the multi-sector MIMO active antenna system 31.

An example in which the multi-sector MIMO active antenna system 31 is the multi-sector MIMO active antenna system shown in FIG. 1 and implements 4×2 MIMO is used. In the multi-sector MIMO active antenna system 31, all 16 PMIs used for MIMO transmission are stored in the BBU 32. The BBU 32 performs precoding processing on a signal that needs to be sent, to obtain each weighted value for MIMO transmission, and sends, by using the weighted values through each antenna of the multi-sector MIMO active antenna system 31, the signal that needs to be sent, thereby implementing MIMO transmission. The multi-sector MIMO active antenna system 31 implements MIMO in two different polarization directions, and MIMO in the two different polarization directions does not interfere with each other. Therefore, the communications device provided in this embodiment improves spectrum utilization efficiency, thereby increasing a network capacity.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof. Therefore, the protection scope of the present invention shall be subject to the protection scope of the claims.

**Claims**

1. A multi-sector multiple-input multiple-output MIMO active antenna system, comprising:
   N columns of dual-polarized antennas, wherein each column of dual-polarized antennas comprises one column of antenna units in a first polarization direction and one column of antenna units in a second polarization direction, wherein the first polarization direction and the second polarization direction are different, each of an antenna unit in the first polarization direction and an antenna unit in the second polarization direction comprises M antenna array elements, N is a natural number greater than or equal to 2, and M is a natural number greater than or equal to 2, wherein:
   in each column of dual-polarized antennas, an antenna unit in the first polarization direction and an antenna unit in the second polarization direction are separately connected to one transceiver, antenna array elements in the antenna unit in the first polarization direction are set to have a first antenna downtilt and serve a first sector, and antenna array elements in the antenna unit in the second polarization direction are set to have a second antenna downtilt and serve a second sector, wherein the first antenna downtilt and the second antenna downtilt are different.

2. The multi-sector MIMO active antenna system according to claim 1, further comprising a first radio control unit RCU and a second RCU, wherein:
   the antenna unit in the first polarization direction is connected to the first RCU, the antenna unit in the second polarization direction is connected to the second RCU, the first RCU corresponds to the first antenna downtilt, and the second RCU corresponds to the second antenna downtilt.

3. The multi-sector MIMO active antenna system according to claim 1 or 2, wherein the first polarization direction is +45° and the second polarization direction is -45°.

4. The multi-sector MIMO active antenna system according to any one of claims 1 to 3, wherein the first sector has N beams in the first polarization direction, and the second sector has N beams in the second polarization direction.

5. A communications device, comprising a multi-sector multiple-input multiple-output MIMO active antenna system and a baseband unit BBU, wherein:
   the multi-sector MIMO active antenna system comprises:
   N columns of dual-polarized antennas, wherein each column of dual-polarized antennas comprises one column of antenna units in a first polarization direction and one column of antenna units in a second polarization direction, wherein the first polarization direction and the second polarization direction are different, each of an antenna unit in the first polarization direction and an antenna unit in the second polarization direction comprises M antenna array elements, N is a natural number greater than or equal to 2, and M is a natural number greater than or equal to 2, wherein:

   in each column of dual-polarized antennas, an antenna unit in the first polarization direction and an antenna unit in the second polarization direction are separately connected to one transceiver, antenna array elements in the antenna unit in the first polarization direction are set to have a first antenna downtilt and serve a first sector, and antenna array elements in the antenna unit in the second polarization direction are set to have a second antenna downtilt and serve a second sector, wherein the first antenna downtilt and the second antenna downtilt are different;
   each transceiver in the multi-sector MIMO active antenna system is connected to the BBU by using an optical fiber; and
   the BBU separately performs MIMO transmission with user equipment UE in the first sector and UE in the second sector by using the multi-sector MIMO active antenna system.

6. The communications device according to claim 5, wherein the multi-sector MIMO active antenna system further comprises a first radio control unit RCU and a second RCU, wherein:

the antenna unit in the first polarization direction is connected to the first RCU, the antenna unit in the second polarization direction is connected to the second RCU, the first RCU corresponds to the first antenna downtilt, and the second RCU corresponds to the second antenna downtilt.

7. The communications device according to claim 5 or 6, wherein the first polarization direction is +45° and the second polarization direction is -45°.

8. The communications device according to any one of claims 5 to 7, wherein the first sector has N beams in the first polarization direction, and the second sector has N beams in the second polarization direction.

FIG. 1

FIG. 2

FIG. 3

# INTERNATIONAL SEARCH REPORT

| International application No. |
|---|
| PCT/CN2015/091810 |

### A. CLASSIFICATION OF SUBJECT MATTER

H01Q 21/00 (2006.01) i

According to International Patent Classification (IPC) or to both national classification and IPC

### B. FIELDS SEARCHED

Minimum documentation searched (classification system followed by classification symbols)

H01Q; H04B

Documentation searched other than minimum documentation to the extent that such documents are included in the fields searched

Electronic data base consulted during the international search (name of data base and, where practicable, search terms used)

CNTXT, CNKI, CNABS, VEN: dual polarization, multiple input multiple output, array element, downward inclination angle, duplex, active, antenna, antena, array, AAS, aas, RRU, dual, polarization, MIMO, mimo

### C. DOCUMENTS CONSIDERED TO BE RELEVANT

| Category* | Citation of document, with indication, where appropriate, of the relevant passages | Relevant to claim No. |
|---|---|---|
| X | CN 101635391 A (ZTE CORP.), 27 January 2010 (27.01.2010), description, page 3, line 17 to page 5, line 8, and figure 1 | 1-4 |
| Y | CN 101635391 A (ZTE CORP.), 27 January 2010 (27.01.2010), description, page 3, line 17 to page 5, line 8, and figure 1 | 5-8 |
| Y | CN 103563170 A (?QUINTEL TECHNOLOGY LTD.), 05 February 2014 (05.02.2014), description, paragraphs [0038]-[0041], and figure 9 | 5-8 |
| A | US 2010227646 A1 (HITACHI CABLE NETWORKS, LTD.), 09 September 2010 (09.09.2010), the whole document | 1-8 |
| A | CN 104143698 A (CHINA TELECOM CORPORATION LIMITED), 12 November 2014 (12.11.2014), the whole document | 1-8 |

☐ Further documents are listed in the continuation of Box C.   ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 20 June 2016 (20.06.2016) | 13 July 2016 (13.07.2016) |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer DAI, Huiying Telephone No.: (86-10) 62411475 |
|---|---|

Form PCT/ISA/210 (second sheet) (July 2009)

## INTERNATIONAL SEARCH REPORT
### Information on patent family members

| International application No. |
| --- |
| **PCT/CN2015/091810** |

| Patent Documents referred in the Report | Publication Date | Patent Family | Publication Date |
| --- | --- | --- | --- |
| CN 101635391 A | 27 January 2010 | None | |
| CN 103563170 A | 05 February 2014 | EP 2689493 A4 | 27 August 2014 |
| | | US 2012244899 A1 | 27 September 2012 |
| | | US 8879997 B2 | 04 November 2014 |
| | | WO 2012135056 A1 | 04 October 2012 |
| | | EP 2689493 A1 | 29 January 2014 |
| US 2010227646 A1 | 09 September 2010 | JP 2011030189 A | 10 February 2011 |
| | | JP 5314622 B2 | 16 October 2013 |
| CN 104143698 A | 12 November 2014 | None | |

Form PCT/ISA/210 (patent family annex) (July 2009)